Europäisches Patentamt

European Patent Office

Office européen des brevets

(11) Numéro de publication: **0 395 475**

**A1**

## (12) DEMANDE DE BREVET EUROPEEN

(21) Numéro de dépôt: **90401070.9**

(22) Date de dépôt: **20.04.90**

(51) Int. Cl.⁵: **G01N 29/04**

(30) Priorité: **24.04.89 FR 8905410**

(43) Date de publication de la demande:
**31.10.90 Bulletin 90/44**

(84) Etats contractants désignés:
**DE ES GB IT**

(71) Demandeur: **AVIONS MARCEL
DASSAULT-BREGUET AVIATION
27, Rue du Professeur Victor Pauchet
F-92420 Vaucresson(FR)**

(72) Inventeur: **Bouheraoua, Ahmed
39 Rue des Buttes Réault
F-91650 Breuillet(FR)**
Inventeur: **Lechelle, Bernard
30 Avenue Henri Bergson
F-92380 Garches(FR)**

(74) Mandataire: **Colas, Jean-Pierre et al
Cabinet de Boisse 37, avenue Franklin D.
Roosevelt
F-75008 Paris(FR)**

(54) **Procédé et dispositif acoustique de localisation de défauts du matériau constituant une pièce et émetteur acoustique utilisable dans ce dispositif.**

(57) Le procédé suivant l'invention consiste dans un premier temps à étudier la réponse acoustique d'une pièce P en enregistrant avec des capteurs acoustiques (1, 2, 3, 4) des signaux émis par un émetteur acoustique (5) calibré, à partir d'une succession de points de repère prédéterminés définissant une grille sur la surface de la pièce, alors que celle-ci est hors contrainte. Dans un deuxième temps on met la pièce sous contrainte et on enregistre les signaux acoustiques en provenance d'évènements acoustiques créés par cette mise sous contrainte de la pièce. Un traitement des temps de propagation et des amplitudes des ondes acoustiques ainsi enregistrées pendant ces deux temps permet d'identifier la position et l'importance de défauts de structure du matériau constituant la pièce P.

Application à la localisation de défauts dans des pièces constituées en matériaux hétérogènes tels que les matériaux composites.

FIG.: 1

EP 0 395 475 A1

## Procédé et dispositif acoustique de localisation de défauts du matériau constituant une pièce et émetteur acoustique utilisable dans ce dispositif.

La présente invention est relative à un procédé et à un dispositif acoustiques de localisation de défauts du matériau constituant une pièce et, plus particulièrement mais non exclusivement, à un tel procédé et un tel dispositif conçus pour l'essai non destructif de pièces en matériaux hétérogènes tels que les matériaux composites par exemple.

On connaît un procédé d'essai non destructif de pièces mécaniques, qui consiste à placer la pièce sous contrainte et à ausculter simultanément la pièce à l'aide de capteurs acoustiques. On constate alors que ceux-ci enregistrent des bruits qui trouvent leur origine dans des désorganisations locales du matériau sous les contraintes appliquées à la pièce, telles que glissement ou rupture de fibres dans les matériaux composites, par exemple, ces bruits naissant plus particulièrement là où la matière présente déjà des discontinuités, lacunes, criques, fissures, etc.... constituant autant de défauts du matériau susceptibles d'altérer la résistance mécanique de la pièce. Il convient alors de localiser ces défauts, notamment lors de l'essai de pièces dont on exige une grande fiabilité en matière de résistance mécanique, comme c'est le cas notamment pour des éléments de structure d'aéronefs.

Suivant un premier procédé connu, on utilise plusieurs capteurs acoustiques disposés autour d'une surface d'une pièce mince à ausculter, on mesure les temps de propagation jusqu'aux capteurs des signaux acoustiques émis aux points de défauts dans la pièce sous contrainte et on repère par triangulation la position de ces points de défauts sur la surface de la pièce. On peut alors visualiser la position des défauts sur la pièce par affichage sur écran vidéo.

Ce procédé convient bien pour des pièces minces en matériaux homogènes où la vitesse du son est la même dans toutes les directions. Pour des pièces en matériaux hétérogènes tels que les matériaux composites à fibres disposées en nappes croisées et noyées dans une résine synthétique par exemple, on ne peut plus faire cette hypothèse et localiser avec précision des défauts par de seules mesures de temps de propagation de signaux acoustiques.

En outre, suivant le procédé connu, on procède à un réglage préalable de la réponse de la pièce à des stimulations acoustiques produites en des points choisis de la surface de cette pièce, en créant ces stimulations à l'aide d'une simple mine de crayon que l'on brise en l'appuyant sur chacun des points choisis. L'amplitude et la forme d'onde du signal acoustique ainsi injecté dans la pièce ne peuvent être contrôlées avec précision et l'on est obligé de répéter plusieurs fois les opérations en chaque point pour obtenir, par effet de moyenne, des mesures grossièrement normées. La répétition des mesures demande beaucoup de temps.

Malgré cette précaution, il est impossible d'exploiter l'amplitude des signaux acoustiques reçus par les capteurs pour remonter à celle de l'onde acoustique engendrée par la mise sous contrainte d'un défaut de la pièce, faute de disposer d'une source acoustique bien référencée en amplitude. Or, l'exploitation de l'amplitude du signal acoustique induit par la mise sous contrainte d'un défaut du matériau serait très riche d'enseignements car cette amplitude est très représentative de l'importance de ce défaut.

La présente invention a donc pour but de fournir un procédé et un dispositif acoustiques de localisation de défauts dans un matériau, notamment au voisinage de la surface d'une pièce de ce matériau, qui permettent de localiser avec précision la position des défauts détectés.

La présente invention a aussi pour but de fournir un tel procédé et un tel dispositif qui permettent de mesurer l'amplitude des ondes acoustiques émises à partir de ces défauts lors de la mise sous contrainte de la pièce, de manière à permettre l'évaluation de l'importance de ces défauts.

La présente invention a encore pour but de réaliser a cet effet un émetteur acoustique capable de produire de manière répétitive et reproductible des ondes acoustiques d'amplitude et de forme d'onde calibrées, pour une injection de ces ondes en des points prédéterminés d'une pièce à étudier à l'aide du procédé suivant l'invention.

On atteint ces buts de l'invention avec un procédé acoustique de localisation de défauts du matériau constituant une pièce, caractérisé en ce qu'on mesure, à l'aide d'au moins trois capteurs acoustiques non alignés et disposés sur la pièce, les temps de propagation jusqu'à ces capteurs d'une onde acoustique injectée dans la pièce non contrainte, en une succession de points de repère distribués sur au moins une partie de la surface de la pièce, on mesure les coordonnées géométriques des points de repère associés, on mesure ensuite les temps de propagation jusqu'aux capteurs d'événements acoustiques déclenchés par la mise sous contrainte de la pièce et on détermine à l'aide d'une norme, appliquée aux différences entre les temps de propagation mesurés hors contrainte et les temps de propagation associés à chaque évènement acoustique détecté dans la pièce sous contrainte, respectivement, les coordonnées de points de repère contigus qui délimitent un élément de la surface de la pièce couvrant la partie de celle-ci où s'est produit un évènement acoustique induit par la mise sous contrainte d'un défaut de structure du matériau.

Suivant l'invention on précise la position du défaut sous l'élément de surface identifié par une interpolation des coordonnées géométriques des points de repère contigus à l'élément de surface, pondérée par l'inverse d'une puissance des normes calculées relativement à ces points.

Suivant l'invention encore, outre les temps de propagation des ondes acoustiques injectées dans la pièce hors contrainte aux points de repère choisis, on mesure les amplitudes des ondes reçues par les capteurs et l'atténuation de ces ondes, à partir de ces amplitudes et de celles de l'onde acoustique injectée, on mesure l'amplitude d'une onde acoustique perçue par le capteur dans la pièce mise sous contrainte et on calcule l'amplitude originale de cette onde acoustique après localisation de l'évènement acoustique qui en est la cause et à l'aide des atténuations calculées des ondes acoustiques émises dans la pièce hors contrainte depuis les points de repère localisant cet évènement.

Le procédé suivant l'invention est mis en oeuvre à l'aide d'un dispositif comprenant au moins trois capteurs acoustiques non alignés et agencés sur la surface d'une pièce pour détecter des évènements acoustiques déclenchés en vue de la localisation d'éventuels défauts du matériau constituant la pièce, caractérisé en ce qu'il comprend un émetteur d'ondes acoustiques calibrées et reproductibles, des moyens de saisie de la position d'une succession de points de repère distribués sur la surface de la pièce, des moyens de mise sous contrainte de la pièce, des moyens d'acquisition et des moyens de mémorisation des signaux acoustiques détectés par les capteurs, d'une part dans la pièce hors contrainte, lors d'émission d'ondes acoustiques injectées dans la pièce par l'émetteur acoustique successivement en chacun des points de repère et, d'autre part, dans la pièce mise sous contrainte, lors d'émissions d'ondes acoustiques associées à des événements acoustiques déclenchés par la mise sous contrainte de la pièce, des moyens de traitement des signaux mis en mémoire lors de l'injection d'ondes acoustiques dans la pièce hors contrainte et des signaux mis en mémoire à la suite de la mise sous contrainte de la pièce, pour calculer les temps de propagation jusqu'aux capteurs des ondes acoustiques associées et pour déterminer à l'aide d'une norme appliquée aux différences entre les temps de propagation mesurés dans la pièce non contrainte et les temps de propagation associés à chaque évènement acoustique né dans la pièce sous contrainte respectivement, les coordonnées de points de repère contigus qui délimitent un élément de la surface de la pièce couvrant la partie de celle-ci où s'est produit un événement acoustique par la mise sous contrainte d'un défaut du matériau.

La présente invention fournit encore un émetteur acoustique utilisable dans le dispositif décrit ci-dessus, cet émetteur étant caractérisé en ce qu'il comprend (a) un réflecteur d'ondes acoustiques en forme de calotte ellipsoïdale, (b) des électrodes de formation d'un arc électrique à un foyer du réflecteur, ces électrodes étant alimentées sélectivement par un générateur de haute tension électrique calibré de manière que l'éclatement d'un arc entre les électrodes s'accompagne de la génération d'une onde de pression acoustique calibrée en amplitude et en forme d'onde, et (c) un boîtier de support du réflecteur et des électrodes conformé pour reposer sur la surface d'une pièce à étudier de manière que l'énergie acoustique émise à l'un des foyers se concentre, après réflexion sur le réflecteur ellipsoïdal, au deuxième foyer ainsi localisé en un point situé en dessous de la surface de la pièce à étudier.

D'autres caractéristiques et avantages de la présente invention apparaîtront à la lecture de la description qui va suivre et à l'examen du dessin annexé dans lequel :

la figure 1 est un schéma fonctionnel du dispositif acoustique de localisation de défauts suivant l'invention et,

la figure 2 est une vue en coupe axiale d'un émetteur acoustique formant partie du dispositif de la figure 1.

On se réfère à cette figure où le dispositif représenté est destiné à la localisation de défauts de structure du matériau constituant une pièce mécanique P qui peut prendre diverses formes.

On a représenté une pièce relativement mince, à titre d'exemple non limitatif, car c'est sur une telle pièce que l'on peut repérer le plus facilement la position d'un défaut de structure du matériau de la pièce, à partir de la surface même de cette pièce. La pièce P peut, par ailleurs, comprendre d'autres éléments tels que des raidisseurs (non représentés) comme c'est le cas par exemple dans les éléments de voilure d'aéronefs.

Pour la localisation d'éventuels défauts de structure du matériau constituant une partie de la pièce P on dispose plusieurs capteurs acoustiques 1, 2, 3, 4 sur la périphérie de la surface de la partie de pièce examinée. On a représenté quatre capteurs disposés au sommet d'un rectangle mais il est clair que l'on pourrait utiliser pour délimiter la surface étudiée trois capteurs seulement à condition bien entendu que ceux-ci ne soient pas alignés. On pourrait également utiliser un plus grand nombre de capteurs au prix d'un accroissement du volume de mesures à traiter comme on le verra dans la suite de la présente description, l'augmentation du nombre des capteurs pouvant permettre en revanche d'accroître la précision des localisations des défauts recherchés. Lorsqu'une onde acoustique se propage dans la pièce, à partir d'un point de la pièce situé sur ou sous la surface délimitée par les capteurs acoustiques 1, 2, 3, 4, les temps de propagation de cette onde jusqu'à ces capteurs sont fonction de la distance séparant le point de génération de l'onde acoustique de chacun de ces capteurs. On appelera globalement dans la suite "image acoustique" l'ensemble des temps de propagation $dt_1$, $dt_2$, $dt_3$, $dt_4$ de l'onde acoustique jusqu'aux capteurs 1, 2, 3, 4 respectivement. On peut associer alors de manière biunivoque cette "image acoustique" aux coordonnées géométriques du point d'émission de l'onde acoustique et ainsi localiser le point d'émission à partir de son image acoustique.

Comme on l'a vu plus haut, dans un matériau de structure hétérogène tel que par exemple un matériau composite comprenant des nappes de fibres croisées, noyées dans une résine synthétique, on ne peut pas faire l'hypothèse suivant laquelle la vitesse de propagation du son est uniforme dans le matériau, du fait de l'hétérogénéité de structure et de l'anisotropie de propriétés de ce matériau.

Si l'on applique alors le procédé de la technique antérieure décrit en préambule de la présente description à la localisation de défauts dans un tel matériau hétérogène, par des mesures de temps de propagation d'ondes acoustiques induites par la mise sous contrainte de ce matériau et se propageant par hypothèse à vitesse uniforme, on tire de ces mesures une distribution géographique des défauts de la pièce étudiée qui présente de fortes distorsions dues justement à l'anisotropie de la vitesse de propagation du son dans le matériau constituant la pièce. C'est là une limitation des procédés de localisation acoustique de la technique antérieure, que la présente invention permet de lever.

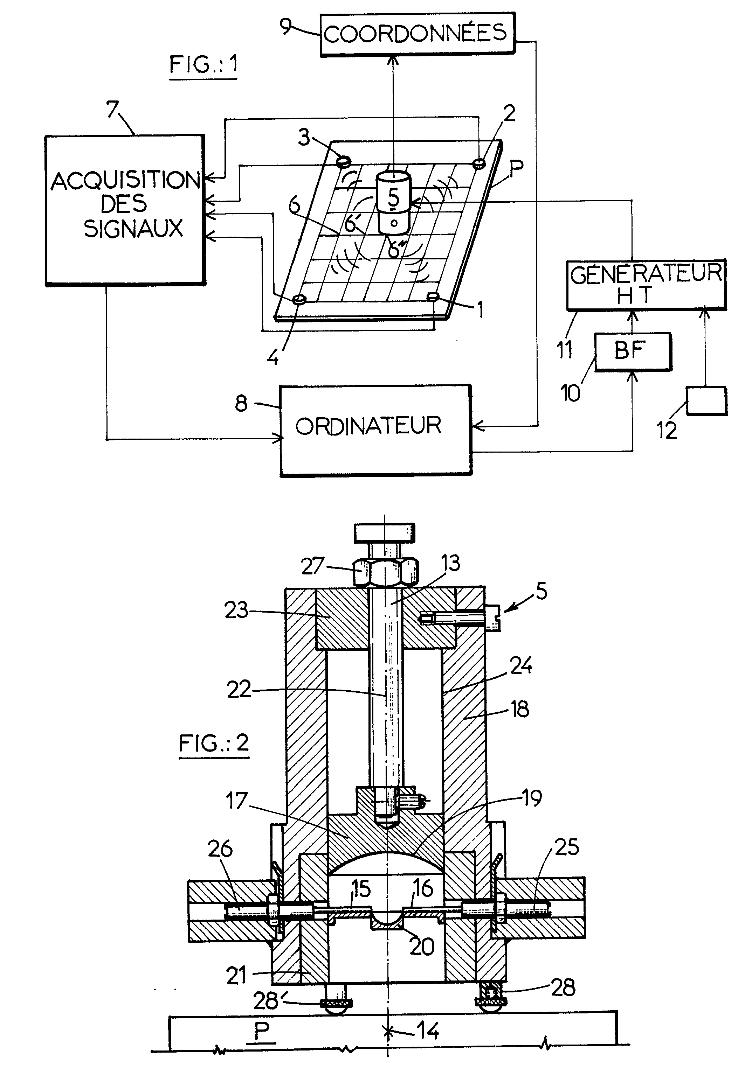

Pour ce faire, suivant la présente invention, on procède dans un premier temps au relevé d'une cartographie "acoustique" de la pièce P, alors que celle-ci n'est soumise à aucune contrainte. Pour cela on mesure et on enregistre d'une part "l'image acoustique" de chacun des points d'un ensemble de points de repère prédéterminés définis sur la surface de la pièce à explorer et, d'autre part, les coordonnées géométriques de ces points. Pour mesurer et enregistrer les images acoustiques de ces points de repère, on utilise, suivant l'invention, un émetteur acoustique original 5 que l'on décrira plus complètement dans la suite en liaison avec l'examen de la figure 2. L'émetteur acoustique 5 est successivement déplacé au droit de chacun des points de repère 6, 6', 6", etc.... définis sur la surface explorée. Il est à noter que ces points peuvent être distribués suivant une grille régulière ou non. Une grille irrégulière peut être choisie lorsque l'on souhaite ausculter plus attentivement des régions de la pièce présentant des discontinuités telles que par exemple des régions voisines de raidisseurs dont le comportement mécanique est influencé par la présence de ces raidisseurs. On dispose d'une grande souplesse quant au choix de la distribution de points de repère à utiliser et on peut adapter cette distribution à des pièces de configurations et de caractéristiques très variées.

Ayant choisi une certaine distribution de points de repère, on place successivement, comme on l'a vu plus haut, l'émetteur acoustique 5 sur chacun des points de repère. A chaque emplacement, on provoque l'émission dans le matériau, au droit de ce point, d'une onde acoustique. Comme on le verra plus loin, l'émetteur 5 comprend à cet effet deux électrodes entre lesquelles on fait jaillir un arc électrique qui provoque la formation d'une onde de pression acoustique dans le matériau. L'onde acoustique ainsi formée et, suivant l'invention, parfaitement calibrée en amplitude et en forme d'onde pour des buts que l'on exposera plus loin, se propage dans la pièce en direction des quatre capteurs acoustiques 1, 2, 3, 4. Connaissant l'instant d'émission de l'onde acoustique et les instants auxquels les capteurs 1, 2, 3, 4 détectent successivement l'arrivée de cette onde, on peut calculer les temps de propagation $dtloc_{1j}$, $dtloc_{2j}$, $dtloc_{3j}$, $dtloc_{4j}$ de l'onde, du point d'émission j à chacun des quatre capteurs 1, 2, 3, 4, respectivement. On peut ainsi attacher à un point de repère d'indice j quatre temps de propagation constituant l'image acoustique du point de repère j.

Suivant une variante de ce procédé d'établissement de l'image acoustique d'un point de repère de la grille, on prend comme instant de référence pour la mesure des temps de propagation, l'instant le plus récent où l'onde atteint l'un des quatre capteurs. On saisit ensuite les instants suivant où l'onde atteint les trois autres capteurs et on calcule les intervalles de temps qui séparent ces instants de l'instant de référence. Les coordonnées acoustiques du point comprennent alors trois composantes non nulles et une composante nulle, la composante nulle variant d'un point de repère à un autre. Dans la suite on assimilera ces composantes à des temps de propagation $dt_i$, bien que cela ne soit pas rigoureusement correct.

Les signaux transmis par les capteurs 1, 2, 3, 4 qui servent à calculer ces temps de propagation, sont tout d'abord traités par un bloc d'acquisition de signaux 7 qui met en forme et numérise ces signaux de manière à ce que ceux-ci puissent être exploités par des moyens de traitement 8 constitués, par exemple, par un ordinateur. Simultanément à la saisie des signaux venus des capteurs, l'ordinateur reçoit d'un bloc 9, les coordonnées géométriques (x, y) des différents points de repère à partir desquels sont émises des ondes acoustiques propres à la saisie des images acoustiques de ces points de repère, comme on l'a vu plus haut. Suivant un mode de réalisation préféré de la présente invention, le bloc d'acquisition de signaux 7 saisit non seulement les instants auxquels les capteurs détectent l'onde acoustique émise mais aussi l'amplitude de l'onde saisie après amortissement de cette onde entre le point d'émission et le capteur considéré. Cette mesure, combinée à la connaissance de l'amplitude calibrée de l'émission de l'émetteur acoustique 5 suivant l'invention, permet de remonter aux amplitudes des évènements acoustiques créés dans la pièce lorsqu'on la met sous contrainte, ces amplitudes permettant d'évaluer l'importance des défauts de la structure du matériau qui induisent ces évènements acoustiques.

L'émission acoustique de l'émetteur 5 peut être déclenchée soit directement par l'ordinateur à travers un générateur d'impulsions basse fréquence 10 commandant un générateur de haute tension 11 qui alimente les électrodes de l'émetteur 5, soit à travers un organe de commande manuel 12 du générateur 11. La première solution permet de repérer l'instant d'émission et de mesurer des temps de propagation réels tout en autorisant une émission cadencée d'arcs électriques par l'émetteur 5, permettant de répéter des mesures en cas d'incident. La seconde solution correspond plus particulièrement au procédé modifié décrit ci-dessus, suivant lequel on référence les temps de propagation à l'instant le plus récent où une onde acoustique atteint l'un des quatre capteurs.

Une fois l'ensemble des points de repère de la surface ausculté à l'aide de l'émetteur acoustique 5, on dispose en mémoire d'ordinateur, pour chaque point de repère, de ses coordonnées géométriques x, y, de son image acoustique constituée par les différents temps de propagation mesurés ou temps assimilés à ces temps de propagation, et des amplitudes des signaux détectés par les quatre capteurs, amplitudes qui permettent de retrouver les atténuations subies par l'onde acoustique dans sa propagation entre l'émetteur et chacun des quatre capteurs. Pendant la phase de relevé préalable décrite ci-dessus, appliquée à une pièce libre de toute contrainte mécanique, on met ainsi en mémoire la réponse de la pièce à des évènements acoustiques provoqués. Grâce à cette mise en mémoire préalable, prévue par le procédé suivant l'invention, on améliore grandement la précision de la localisation des défauts dans la pièce, une fois celle-ci mise sous contrainte, ainsi qu'on va l'expliquer maintenant.

Après cette phase de relevé préalable du procédé suivant l'invention, on place la pièce à étudier sous contrainte mécanique pour que les défauts de structure éventuels du matériau qui la constituent se révèlent par l'émission d'ondes acoustiques, ou "évènements" acoustiques, qui sont alors perçus par les capteurs, en instants de passage et en amplitude, ces informations étant ensuite traitées dans l'ordinateur équipé d'un logiciel approprié pour en déduire les temps de propagation $dt_i$ (i variant de 1 à 4 dans le cas de quatre capteurs) et les atténuations du signal entre le lieu de l'évènement et les quatre capteurs, en vue de retrouver la position et l'amplitude de l'onde acoustique engendrée par l'évènement, et donc l'importance du défaut qui en est la cause.

Suivant l'invention, la pièce est mise progressivement sous contrainte ce qui provoque l'apparition successive d'évènements acoustiques qui sont ainsi discriminés par leurs instants d'apparition dans le temps. On peut étaler l'apparition de ces évènements acoustiques par le choix d'une montée en contrainte présentant des phases de croissance et des paliers judicieusement disposés. Des essais ont montré que, couramment, la durée d'un évènement acoustique est de quelques millisecondes. Pour étaler dans le temps l'apparition de ces évènements acoustiques, on peut choisir une courbe de montée en contrainte présentant des phases de croissance d'une durée de 30 secondes à une minute par exemple, séparées par des plateaux d'une durée d'une à plusieurs minutes, par exemple.

Il s'agit donc, pour chacun des évènements acoustiques détectés successivement dans la pièce lors de la montée progressive en contrainte de cette pièce, de déterminer la position du défaut ayant induit cet évènement acoustique et l'importance de ce défaut, par l'amplitude de l'évènement acoustique détecté. On dispose pour ce faire d'un fichier, mis en mémoire d'ordinateur, contenant les coordonnées géométriques et les images acoustiques de tous les points de repère saisis pendant la phase de relevé préalable ainsi que les atténuations de l'onde acoustique émise en chacun des points de repère, dans sa propagation vers chacun des quatre capteurs du dispositif.

Suivant l'invention, on détermine d'abord une position approchée du défaut, en identifiant les quatre points de repère qui délimitent l'élément de la surface de la pièce en dessous duquel se trouve localisé le défaut.

Pour ce faire on calcule une "norme" à partir des temps de propagation $dt_i$ de l'évènement acoustique détecté et des images acoustiques de chacun des points mis en mémoire. En d'autres termes, par des opérations mathématiques sur les différences des temps de propagation relevés lors de la phase de relevé préalable du procédé suivant l'invention, et relevés à la perception par les capteurs d'un évènement acoustique particulier, on détermine les quatre points de repère dont les distances aux défauts sont les plus courtes. Les quatre points délimitent l'élément de surface couvrant le défaut détecté.

Une première norme utilisable à cet effet est la norme dite "euclidienne" qui s'exprime sous la forme suivante :

où dtloc$_{ij}$ désignent les temps de propagation mesurés lors de l'émission dans la pièce non contrainte d'une onde acoustique en un point de repère j et où,

dt$_i$ désigne les temps de propagation relevés lors de l'évènement acoustique induit par un défaut dans la pièce mise sous contrainte,

i variant de 1 à 4 dans le cas de quatre capteurs.

Grâce à un algorithme de calcul correspondant programmé dans le logiciel exécuté par l'ordinateur, celui-ci calcule rapidement les quatre plus petites valeurs de cette norme, ces quatre plus petites valeurs permettant d'identifier les quatre points de repère délimitant l'élément de surface recherché.

D'autres normes pourraient être utilisées à cet effet telles que la norme City block :
la norme Chebytchev :
la norme d'ordre 2 :
la norme d'ordre 3 :

Ayant ainsi identifié les quatre points qui délimitent l'élément de surface qui couvre le défaut que l'on cherche à localiser, on peut préciser encore la position du défaut par rapport à ces quatre points par des interpolations permettant de définir les coordonnées x et y calculées du défaut, par rapport à la surface de la pièce étudiée. Les quatre plus petites valeurs de normes calculées dans la phase précédente vont être utilisées pour cette interpolation. La pondération fait alors intervenir l'inverse de la norme comme coefficient de pondération. Cette pondération privilégie les points les plus proches. On a constaté expérimentalement que de cette façon les points interpolés peuvent être quelque peu décalés de points simulés et choisis à proximité d'un point de repère. On a donc choisi, pour augmenter l'influence des points proches, une pondération par l'inverse du carré de la norme. Ainsi, l'expression suivante :

où (norme n) représente la norme par rapport à l'un des quatre points de repère n les plus proches du défaut et où x(n) correspond à la coordonnée x de chacun des quatre points de repère les plus proches considérés, permet d'obtenir avec une bonne précision la coordonnée x du défaut à localiser, l'autre coordonnée géométrique y du défaut prenant une forme analogue.

On a pu constater expérimentalement que les meilleurs résultats étaient obtenus avec une interpolation sur quatre points.

Ayant ainsi déterminé avec précision la position du défaut recherché, on peut aller plus loin, grâce à l'invention, en évaluant l'amplitude de l'onde acoustique induite par la présence du défaut lors de la montée en contrainte de la pièce étudiée, pour déterminer alors l'importance du défaut qui est très liée, comme on l'a vu plus haut, à l'amplitude de l'onde acoustique émise.

Pour ce faire on exploite, à l'aide des moyens de calcul et d'un logiciel approprié présents dans l'ordinateur, les atténuations mesurées des ondes acoustiques émises lors de la phase de relevé préalable, à partir des points de repère qui encadrent le défaut localisé. Grâce au fait que les ondes émises par l'émetteur acoustique suivant l'invention sont, comme on le verra plus loin, précisément calibrées en amplitude, on peut, connaissant ces atténuations, remonter à l'amplitude réelle de l'évènement acoustique créé par le défaut, en connaissant seulement l'amplitude de l'onde telle qu'elle est parvenue aux capteurs utilisés. On peut pour cela, soit ajouter à l'amplitude détectée de l'onde associée à l'évènement la moyenne des atténuations enregistrées par les quatre capteurs lors de l'émission, en phase de relevé préalable, d'ondes acoustiques à partir des quatre points de repère considérés, soit ne prendre en compte que l'amplitude détectée de l'onde associée à l'évènement au niveau du premier capteur atteint par l'onde et lui ajouter la moyenne des quatre atténuations ci-dessus, seulement dans la direction du premier capteur atteint.

Une fois la phase de montée en contrainte de la pièce terminée, et les calculs décrits ci-dessus exécutés par l'ordinateur, celui-ci conserve en mémoire un fichier des coordonnées géométriques des défauts localisés et un fichier des amplitudes de ces défauts. Il est alors possible de visualiser par cartographie sur un écran vidéo par exemple, la position des défauts sur la pièce et/ou l'importance de ces défauts. Les zones défectueuses de la pièce sont ainsi visualisées très commodément et la distribution des défauts. ainsi que leur importance peut être appréciée rapidement. Le procédé suivant l'invention constitue ainsi un puissant moyen de contrôle non destructif de pièces mécaniques.

On se réfère maintenant à la figure 2 pour décrire en détail la structure et le fonctionnement de l'émetteur acoustique qui a été créé spécialement pour permettre la mise en oeuvre de l'invention, notamment en ce qu'elle permet la visualisation de l'importance des défauts détectés par la mesure des amplitudes des ondes acoustiques associées aux évènements acoustiques induits par la présence de ces défauts lors de la mise sous contrainte de la pièce étudiée.

Sur cette figure il apparaît que l'émetteur acoustique 5 repose sur la surface de la pièce P à étudier, de manière que l'axe 13 de l'émetteur soit sensiblement centré sur un point de repère 14 de la pièce 5 où l'on souhaite, en phase de relevé préalable, faire naître une onde acoustique dont on va suivre la propagation dans la pièce à l'aide des capteurs 1, 2, 3, 4. Des pieds réglables au nombre de trois par exemple, dont deux références 28, 28' sont visibles sur la figure, sont prévus sur l'émetteur pour un but que l'on décrira plus loin.

L'émetteur 5 comprend essentiellement deux électrodes 15, 16 séparées par un intervalle centré sur l'axe 13, et un réflecteur acoustique 17, les électrodes et le réflecteur étant montés dans un boîtier 18 généralement cylindrique. Les électrodes sont alimentées par le générateur de tension 11 sous la commande de l'ordinateur 8, par l'intermédiaire du générateur d'impulsions de basse fréquence 10 ou du boîtier de commande manuelle 12 (voir figure 1). Lors de l'éclatement d'un arc électrique entre les électrodes 15 et 16, il y a production d'une onde de pression acoustique qui est réfléchie par le réflecteur 17 et focalisée en un point 14 intérieur à la pièce. On atteint ce résultat en donnant à une surface réfléchissante 19 du réflecteur 17 la forme d'une calotte d'ellipsoïde centrée sur l'axe 13 confondu avec le grand axe de l'ellipsoïde et en plaçant l'espace qui sépare les électrodes 15 et 16 au foyer de cette ellipsoïde qui est le plus proche de cette calotte. Ainsi les ondes acoustiques en provenance de ce foyer de l'ellipsoïde seront-elles réfléchies par la surface 19 vers l'autre foyer de cette ellipsoïde, précisément localisé au point 14.

Un deuxième réflecteur acoustique 20 est disposé sur l'axe 13 en présentant une surface réfléchissante incurvée placée en regard de celle du réflecteur 17. Ce réflecteur 20 permet d'améliorer la concentration des ondes acoustiques émises au moment de l'éclatement de l'arc entre les électrodes 15 et 16. En outre, le boîtier 18 est muni d'une garniture 21 en un matériau absorbant les ondes acoustiques, qui enveloppe annulairement l'espace où sont engendrées ces ondes, ceci pour améliorer la focalisation des ondes acoustiques au foyer 14, en empêchant que des ondes émises dans des directions très inclinées sur l'axe 13 ne viennent s'ajouter à celles renvoyées par le réflecteur 17.

On remarquera encore, sur la figure 2, que le réflecteur 17 est solidaire d'une vis 22 qui traverse un bouchon 23 d'extrémité de l'émetteur 5. Le réflecteur 17 est lui-même monté à coulissement dans un alésage central 24 du boîtier 18 de l'émetteur et peut être déplacé dans cet alésage, suivant l'axe 13 par une action convenable sur la vis 22. On peut ainsi ajuster précisément la position de la surface réfléchissante 19 du réflecteur 17 par rapport à l'intervalle qui sépare les électrodes 15 et 16, intervalle qui doit se situer de préférence au foyer de la calotte ellipsoïdale qui définit cette surface réfléchissante 19. On notera encore la présence d'un contre-écrou de blocage 27 sur la vis 22 pour fixer, après réglage, la position du réflecteur 17.

On peut obtenir un déplacement du point de focalisation des ondes acoustiques et ainsi régler la position de ce point de focalisation par rapport à la surface de la pièce P à étudier en ajustant convenablement la hauteur des pieds réglables.

Pour éviter de parasiter l'environnement de l'émetteur acoustique suivant l'invention et de perturber ainsi éventuellement le fonctionnement des appareils électroniques qui l'entourent, le boîtier 18 est constitué en un matériau métallique mis à la masse, qui assure un blindage vis-à-vis des émissions électromagnétiques provoquées par l'éclatement des arcs à l'intérieur de ce boîtier. De même la puissance électrique nécessaire à la production des arcs est amenée aux électrodes 15, 16 par des câbles électriques blindés 25, 26 respectivement.

Le générateur de haute tension 11 peut comprendre classiquement un transformateur haute tension. Suivant une variante (non représentée) de l'émetteur acoustique selon l'invention, ce générateur, connecté aux électrodes et à des moyens d'alimentation électriques extérieurs, peut être disposé sur l'émetteur acoustique ou, mieux, à l'intérieur de celui-ci, pour améliorer la sécurité électrique du dispositif suivant l'invention.

Suivant un mode de réalisation préféré de l'éclateur selon l'invention, les deux électrodes 15, 16 sont distantes de quelques millimètres et l'intervalle qui les sépare est disposé à un centimètre environ au-dessus de la surface de la pièce à étudier.

Comme on l'a vu plus haut, l'émetteur acoustique suivant l'invention est utilisé dans une phase de relevé préalable du procédé suivant l'invention, pour réaliser un enregistrement de la réponse acoustique de la pièce à étudier à partir d'évènements acoustiques provoqués en des points de repère prédéterminés de la pièce. Pour ce faire, on place successivement l'émetteur sur les points de repère choisis, pour injecter en ces points des ondes acoustiques dont on suit la propagation dans la pièce à l'aide des capteurs 1, 2, 3, 4. Une étincelle produite entre les électrodes par le générateur 11 engendre une onde de pression acoustique. En réglant convenablement le générateur haute tension, on peut calibrer cette onde de pression. Ceci est un avantage important de l'émetteur suivant l'invention car, comme on l'a vu plus haut, c'est grâce à ce calibrage de l'onde de pression que l'on peut remonter, en phase d'enregistrement des évènements acoustiques créés dans la pièce lors de sa mise sous contrainte, aux amplitudes des ondes acoustiques associées à ces évènements, pour permettre ainsi une évaluation quantitative de l'importante de ces évènements, qui est liée à celle des défauts qui sont à l'origine de ceux-ci. On peut alors cartographier les défauts en position et visualiser leur importance.

La présente invention présente ainsi de nombreux avantages. Tout d'abord, grâce à la phase de relevé préalable originale d'étude de la réponse acoustique de la pièce étudiée, on améliore beaucoup la précision de la localisation des défauts du matériau de la pièce, notamment dans le cas de pièces en matériaux hétérogènes tels que les matériaux composites, présentant une grande anisotropie de vitesse de propagation du son. La technique antérieure présentée en préambule de la présente description, limitée par l'hypothèse d'une vitesse de propagation uniforme, introduit de grandes distorsions dans l'image acoustique de telles pièces, distorsions qui influencent défavorablement la localisation géométrique des défauts. La précision du procédé de localisation suivant l'invention peut encore être accrue par la mise en oeuvre du procédé d'interpolation décrit plus haut. En outre, grâce à l'émetteur acoustique calibré original utilisé dans l'invention, une visualisation de l'importance des défauts, impossible dans la technique antérieure, est maintenant disponible.

## Revendications

1. Procédé acoustique de localisation de défauts du matériau constituant une pièce, caractérisé en ce qu'on mesure, à l'aide d'au moins trois capteurs acoustiques non alignés et disposés sur la pièce, les temps de propagation jusqu'à ces capteurs d'une onde acoustique injectée dans la pièce non contrainte, en une succession de points de repère distribués sur au moins une partie de la surface de la pièce, on mesure les coordonnées géométriques des points de repère associés, on mesure ensuite les temps de propagation jusqu'aux capteurs d'évènements acoustiques déclenchés par la mise sous contrainte de la pièce et on détermine à l'aide d'une norme, appliquée aux différences entre les temps de propagation mesurés hors contrainte et les temps de propagation associés à chaque évènement acoustique né dans la pièce sous contrainte, respectivement, les coordonnées de points de repère contigus qui délimitent un élément de la surface de la pièce couvrant la partie de celle-ci où s'est produit un évènement acoustique induit par la mise sous contrainte d'un défaut de structure du matériau.

2. Procédé conforme à la revendication 1, caractérisé en ce qu'on précise la position du défaut dans l'élément de surface identifié, par une interpolation des coordonnées géométriques des points de repère contigus à l'élément de surface, pondérée par l'inverse d'une puissance des normes calculées relativement à ces points.

3. Procédé conforme à l'une quelconque des revendications 1 ou 2, caractérisé en ce que, outre les temps de propagation des ondes acoustiques injectées dans la pièce hors contrainte aux points de repère choisis, on mesure les amplitudes des ondes reçues par les capteurs et l'atténuation de ces ondes, à partir de ces amplitudes et de celles de l'onde acoustique injectée, on mesure l'amplitude d'une onde acoustique perçue par le capteur dans la pièce mise sous contrainte et on calcule l'amplitude originale de cette onde acoustique après localisation de l'évènement acoustique qui en est la cause et à l'aide des atténuations calculées des ondes acoustiques émises dans la pièce hors contrainte depuis les points de repère localisant cet évènement.

4. Procédé conforme à l'une quelconque des revendications 1 à 3, mettant en oeuvre au moins quatre capteurs, caractérisé en ce que, pour la mesure des temps de propagation d'une onde acoustique, on mesure ces temps à compter de l'instant de première détection de l'onde acoustique par l'un des quatre capteurs.

5. Dispositif pour la mise en oeuvre du procédé conforme à la revendication 1, comprenant au moins trois capteurs acoustiques (1, 2, 3, 4) non alignés et agencés sur la pièce (P) pour détecter des évènements acoustiques déclenchés dans la pièce (P) en vue de la localisation d'éventuels défauts du matériau de la pièce, caractérisé en ce qu'il comprend un émetteur (5) d'ondes acoustiques calibrées et reproductibles, des moyens de saisie (9) de la position d'une succession de points de repère distribués sur la surface de la pièce, des moyens de mise sous contrainte de la pièce, des moyens d'acquisition (7) et des moyens de mémorisation des signaux acoustiques détectés par les capteurs, d'une part dans la pièce hors contrainte, lors d'émission d'ondes acoustiques injectées dans la pièce par l'émetteur acoustique successivement en chacun des points de repère et, d'autre part dans la pièce mise sous contrainte, lors d'émission d'ondes acoustiques associées à des évènements acoustiques déclenchés par la mise sous contrainte de la pièce, des moyens de traitement (8) des signaux mis en mémoire lors de l'injection d'ondes acoustiques dans la pièce hors contrainte et des signaux mis en mémoire à la suite de la mise sous contrainte de la pièce, pour calculer les temps de propagation jusqu'aux capteurs des ondes acoustiques associées et pour déterminer à l'aide d'une norme appliquée aux différences entre les temps de propagation mesurés dans la pièce non contrainte et les temps de propagation associés à chaque évènement acoustique né dans la pièce sous contrainte respectivement, les coordonnées de points de repère contigus qui délimitent un élément de la surface de la pièce couvrant la partie de celle-ci où s'est produit un évènement acoustique par la mise sous contrainte d'un défaut du matériau.

6. Dispositif conforme à la revendication 5, caractérisé en ce que les moyens de traitement comprennent des moyens d'interpolation des coordonnées géométriques des points de repère contigus à l'élément de surface identifié, avec pondération par l'inverse d'une puissance des normes calculées relativement à ces points, pour la détermination de la position géométrique d'un évènement acoustique induit, dans la pièce sous contrainte, par un défaut de structure du matériau constituant cette pièce.

7. Dispositif conforme à l'une quelconque des revendications 5 et 6, caractérisé en ce que les moyens d'acquisition des signaux acoustiques en provenance des capteurs saisissent, outre l'instant d'acquisition de ces signaux par les capteurs, l'amplitude des signaux saisis, les moyens de traitement étant conçus pour élaborer à partir de ces amplitudes, celles des évènements acoustiques induits par la mise sous contrainte de la pièce.

8. Dispositif conforme à la revendication 7, caractérisé en ce qu'il comprend des moyens pour afficher une cartographie de la distribution des évènements acoustiques créés dans la pièce sous contrainte et l'amplitude de ces événements acoustiques.

9. Dispositif conforme à l'une quelconque des revendications 5 à 8, caractérisé en ce que les moyens de traitement font partie d'un ordinateur (8), cet ordinateur comprenant des moyens pour commander sélectivement le déclenchement de l'émetteur acoustique.

10. Dispositif conforme à la revendication 9, caractérisé en ce qu'il comprend en outre des moyens (12) de déclenchement manuel de l'émetteur acoustique.

11. Emetteur acoustique utilisable dans le dispositif conforme à l'une quelconque des revendications 5 à 10, caractérisé en ce qu'il comprend (a) un réflecteur (17) d'ondes acoustiques en forme de calotte ellipsoïdale, (b) des électrodes (15, 16) de formation d'un arc électrique à un foyer du réflecteur, ces électrodes étant alimentées sélectivement par un générateur de haute tension électrique (11) calibré de manière que l'éclatement d'un arc entre les électrodes s'accompagne de la génération d'une onde de pression acoustique calibrée en amplitude et en forme d'onde, et (c) un boîtier (18) de support du réflecteur et des électrodes conformé pour reposer sur la surface d'une pièce à étudier de manière que l'énergie acoustique émise à l'un des foyers se concentre, après réflexion sur le réflecteur ellipsoïdal, au deuxième foyer (14) ainsi localisé en un point situé en dessous de la surface de la pièce à étudier.

12. Emetteur conforme à la revendication 11, caractérisé en ce qu'il comprend une garniture intérieure (21) en un matériau amortisseur d'ondes acoustiques, cette garniture (21) étant fixée sur le boîtier (18) coaxialement au grand axe (13) de l'ellipsoïde de manière à s'étendre de la face d'appui (5') au réflecteur ellipsoïdal (17).

13. Emetteur conforme à l'une quelconque des revendications 11 et 12, caractérisé en ce qu'il comprend un réflecteur auxiliaire (20) centré sur l'axe focal de l'ellipsoïde au niveau de l'espace interélectrode pour réfléchir les ondes acoustiques vers le réflecteur ellipsoïdal (17).

14. Emetteur conforme à l'une quelconque des revendications 11 à 13, caractérisé en ce qu'il comprend des moyens de réglage (22, 27) de la position axiale du réflecteur ellipsoïdal.

15. Emetteur conforme à l'une quelconque des revendications 11 à 14, caractérisé en ce qu'il comprend des pieds réglables (28, 28') pour ajuster la position du deuxième foyer dans la pièce à étudier.

16. Emetteur conforme à l'une quelconque des revendications 11 à 15, caractérisé en ce que le boîtier est conformé et réalisé en un matériau qui assure un blindage électrique de cet émetteur.

17. Emetteur conforme à l'une quelconque des revendications 11 à 16, caractérisé en ce qu'il comprend un générateur de haute tension connecté à des moyens d'alimentation extérieurs et aux électrodes de l'émetteur pour fournir la haute tension nécessaire à la production d'un arc entre ces électrodes.

EP 0 395 475 A1

FIG.: 1

FIG.: 2

Office européen des brevets

# RAPPORT DE RECHERCHE EUROPEENNE

Numero de la demande

EP 90 40 1070

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 021 196 (SIEMENS) <br> * Page 7, ligne 26 - page 8, ligne 30; page 10, ligne 21 - page 11, ligne 15; résumé; figures 1,3 * <br> --- | 1 | G 01 N 29/04 |
| A | PATENT ABSTRACTS OF JAPAN, vol. 10, no. 210 (P-479)[2266], 23 juillet 1986; & JP-A-61 50 064 (NIPPON TELEGR. & TELEPH. CORP.) 12-03-1986 <br> --- | 1 | |
| A | US-A-4 742 713 (ABE) <br> * Colonne 4, ligne 30 - colonne 6, ligne 10; résumé; figures 1-3 * <br> ----- | 1 | |

DOMAINES TECHNIQUES RECHERCHES (Int. Cl.5)

G 01 N

Le présent rapport a été établi pour toutes les revendications

| Lieu de la recherche | Date d'achèvement de la recherche | Examinateur |
|---|---|---|
| LA HAYE | 25-07-1990 | BOSMA R.A.P. |

EPO FORM 1503 03.82 (P0402)